# EUROPÄISCHE PATENTSCHRIFT

(11) **EP 1 296 855 B1**
(45) Veröffentlichungstag und Bekanntmachung des Hinweises auf die Patenterteilung: **06.02.2008**
(21) Anmeldenummer: 01965056.3
(22) Anmeldetag: 03.07.2001
(51) Int. Cl.: B60R 7/02

(54) **LADERAUM FÜR EIN KRAFTFAHRZEUG**
LOADING COMPARTMENT FOR A MOTOR VEHICLE
COMPARTIMENT DE RECEPTION POUR VEHICULE AUTOMOBILE

(30) Priorität: 05.07.2000 DE 10032706; 22.09.2000 DE 10047541
(43) Veröffentlichungstag der Anmeldung: 02.04.2003
(73) Patentinhaber: BOS GmbH & Co. KG, 73760 Ostfildern (DE)
(72) Erfinder: HASPEL, Klaus, 72108 Rottenburg (DE); SEEG, Thomas, 73760 Ostfildern (DE); SCHLECHT, Werner, P., 71665 Vaihingen/Enz (DE)
(74) Vertreter: Patentanwälte Ruff, Wilhelm, Beier, Dauster & Partner
(86) Internationale Anmeldenummer: PCT/EP2001/007599
(87) Internationale Veröffentlichungsnummer: WO 2002/002372

(56) Entgegenhaltungen:
- US-A- 3 326 596
- US-A- 4 911 296
- US-A- 5 951 085

## Beschreibung

Die Erfindung betrifft einen Laderaum für ein Kraftfahrzeug mit einem Laderaumboden sowie mit zwei einander gegenüberliegenden Seitenwänden, wobei wenigstens eine Seitenwand mit wenigstens einem formstabilen Funktionsmodul versehen ist, das karosserieseitig gehalten ist, und das einen offenen oder geschlossenen Aufnahmeraum für wenigstens ein Funktionsteil aufweist.

Ein solcher Laderaum für ein Kraftfahrzeug ist aus der US 4,911,296 A bekannt. Dort ist ein Notfallkoffer im Laderaum eines Personenkraftwagens verstaut. Der Koffer weist einen Bereich auf, in dem Kanister für Kraftstoff, Öl, Kühlmittel oder ähnliches untergebracht werden können. In einem weiteren Bereich kann Werkzeug untergebracht werden. Schließlich ist ein Bereich vorgesehen, in dem medizinische Hilfsmittel untergebracht sind.

Die Erfindung geht weiter aus von einem Laderaum wie er aus der US 5,951,085 bekannt ist.

Weitere Laderäume sind für Kombi-Personenkraftwagen oder Großraumlimousinen allgemein bekannt. Die Seitenwände der Laderäume sind individuell gestaltet und auf die jeweiligen Karosseriegegebenheiten abgestimmt. Die Seitenwände der Laderäume werden durch Innenverkleidungsteile gebildet. Hinter den Seitenverkleidungen sind karosseriefest Funktionsteile wie Verbandskasten, Werkzeugtasche, CD-Wechsler, Navigationsgerät oder ähnliches befestigt. Um einen Zugang vom Laderaum aus zu diesen Funktionsteilen zu ermöglichen, sind Teile der Seitenverkleidungen abnehmbar gestaltet.

Aufgabe der Erfindung ist es, einen Laderaum der eingangs genannten Art zu schaffen, der variabel strukturiert werden kann und dennoch einheitlich gestaltet ist.

Diese Aufgabe wird dadurch gelöst, dass das wenigstens eine Funktionsmodul in der Seitenwand integriert ist. Falls mehrere Funktionsmodule vorgesehen sind, so kann die jeweilige Seitenwand des Laderaums über ihre gesamte Länge - in Fahrzeuglängsrichtung gesehen - durch die Funktionsmodule geschaffen sein. Wesentlicher Vorteil der erfindungsgemäßen Lösung ist es, dass direkt am Funktionsmodul ein entsprechender Aufnahmeraum für wenigstens ein Funktionsteil vorgesehen ist, so dass das Funktionsteil bereits vor dem Einbau des Funktionsmoduls vormontiert werden kann. Karosserieseitige Aufnahmen oder Halterungen für entsprechende Funktionsteile müssen nicht vorgesehen sein, so dass ein entsprechender Laderaum nach Kundenwunsch auch im fertiggestellten Zustand des Fahrzeugs noch individuell ausgestattet und strukturiert werden kann, ohne dass karosserie- oder rohbauseitige Maßnahmen hierzu vorgesehen sein müssen. Der Aufnahmeraum kann durch entsprechende Böden oder Wandabschnitte in mehrere Fächer unterteilt sein. Laderäume im Sinne der Erfindung sind sowohl Kofferräume von Personenkraftwagen als auch Laderäume von Kombi-Personenkraftwagen und Großraumlimousinen.

Das Funktionsmodul ist mittels einer formschlüssig wirksamen, manuell lösbaren Halterung im Laderaum befestigt. Dadurch ist eine werkzeuglose Montage und Demontage des Funktionsmoduls ermöglicht. Die formschlüssige Gestaltung der Halterung ermöglicht eine crashsichere Befestigung des Funktionsmoduls im Fahrzeug.

Als Funktionsteile können sowohl Technikmodule wie CD-Wechsler, Navigationsgerät, Soundsystem oder andere elektrische oder elektronische Bauteile wie auch Verbandskasten, Werkzeugtasche, Warndreieck, Abschleppseil, Starterkabel oder ähnliche Gegenstände dienen. Als Funktionsteile können aber auch nicht fahrzeugeigene Teile vorgesehen sein, die in geeigneter Weise im Fahrzeug verstaut werden sollen. Insbesondere sind unter den Funktionsteilen auch Aufnahmebehältnisse mit öffen- oder schließbaren Bereichen, andere Arten von Speicher- oder Lagerbehältern, Freizeit- und Hobbyzubehör und ähnliche Teile zu verstehen.

In Ausgestaltung der Erfindung ist wenigstens eine Stirnfläche des Funktionsmoduls mit einer Verkleidung versehen, die auf die übrige Verkleidungsfläche des Laderaumes abgestimmt ist. Dadurch kann sich das Funktionsmodul optisch in die Innenraumgestaltung einfügen. Die Abstimmung kann dadurch erzielt werden, dass für die Verkleidung das gleiche Material wie für die übrige Verkleidungsfläche vorgesehen ist. Alternativ kann eine Abstimmung auch durch eine optische und/oder haptische Anpassung mittels anders gestalteter Materialien oder Oberflächen erfolgen.

In weiterer Ausgestaltung der Erfindung ist das Funktionsmodul als zu wenigstens einer Seite offenes Behältnis gestaltet. Das Funktionsmodul kann schalen-, kasten- oder wannenförmig gestaltet sein. Es kann insbesondere auch lediglich aus einer zum Laderaum hin zeigenden Stirnwand sowie einer einzelnen Seitenwand gebildet sein. In diesem Fall ergibt sich der geschlossene Aufnahmeraum dann durch die angrenzenden Wandungs-abschnitte der Seitenwand oder der Karosserie, sobald das Funktionsmodul sich in seinem an der Karosserie montierten, fahrzeugfesten Zustand befindet.

In weiterer Ausgestaltung der Erfindung ist das Funktionsmodul als geschlossenes, kastenartiges Behältnis gestaltet. Vorzugsweise weist dieses Behältnis eine Klappe oder einen Deckel auf, um es befüllen und entleeren zu können. Vorzugsweise ist das Behältnis auch mit wenigstens einem Tragegriff versehen, um einen Transport außerhalb des Fahrzeugs zu ermöglichen.

In weiterer Ausgestaltung der Erfindung weist das Funktionsmodul wenigstens einen Steckanschluss für die lösbare Verbindung zu fahrzeugfesten elektrischen Anschlussleitungen auf. Diese Ausgestaltung ist insbesondere vorteilhaft, falls das Funktionsmodul mit elektrischen oder elektronischen Funktionsteilen versehen ist, da diese in einer Vormontage mit dem funktionsmodulseitigen Steckanschluss verbunden werden können, der dann beim Einsetzen des Funktionsmoduls ins Fahrzeug mit den fahrzeugseitigen Anschlussleitungen verbunden werden kann.

In weiterer Ausgestaltung der Erfindung ist laderaumseitig ein korrespondierender Verbindungsanschluss vorgesehen, der mit dem Steckanschluss im montierten Zustand des Funktionsmoduls eine Steckverbindung eingeht. Der laderaumseitige, d.h. karosserieseitige Verbindungsanschluss ist vorzugsweise so positioniert, dass automatisch beim Einsetzen des Funktionsmoduls die Steckverbindung mit dem funktionsmodulseitigen Steckanschluss erfolgt. Hierzu ist der Steckanschluss am Funktionsmodul in geeigneter Weise angeordnet und befestigt, um zwangsläufig mit dem Einsetzen des Funktionsmoduls die Steckverbindung mit dem Verbindungsanschluss zu erzielen.

In weiterer Ausgestaltung der Erfindung sind im Bereich einer Seitenwand wenigstens zwei aneinander anschließende Funktionsmodule vorgesehen, die miteinander fluchtende, ins Laderauminnere weisende Stirnflächen aufweisen. Dadurch ist es möglich, den Freiraum zwischen Seitenwand und Karosserieseite für die Positionierung von Funktionsteilen zu nutzen. Die Funktionsmodule können sich auch über die gesamte Länge der Seitenwand des Laderaumes erstrecken, so dass die Funktionsmodule mit ihrer in den Laderaum zeigenden Stirnwand die Seitenwand für den Laderaum bilden.

In weiterer Ausgestaltung der Erfindung ist karosserieseitig wenigstens eine fest angeordnete, sich in Fahrzeugquerrichtung erstreckende Schottwand vorgesehen, die ein Funktionsmodul seitlich flankiert oder zwischen zwei benachbarten Funktionsmodulen angeordnet ist. Derartige Schottwände können zum einen eine Abstützung des jeweils in Fahrtrichtung dahinterliegenden Funktionsmoduls erzielen. Zum anderen können sie Seitenwände für zu dieser Seite offene Funktionsmodule darstellen. Schließlich können sie mit Halterungs- oder Befestigungsmitteln versehen sein, um die Befestigung der Funktionsmodule zu ermöglichen.

In weiterer Ausgestaltung der Erfindung weist das Behältnis wenigstens einen Tragegriff auf, der zusätzlich als Bedienelement für die manuell lösbare Halterung des Behältnisses im Laderaum ausgeführt ist. Dadurch besitzt der Tragegriff eine Doppelfunktion, indem er zum einen zum Tragen des Behältnisses und zum anderen zum Montieren und Demontieren des Behältnisses, d.h. des Funktionsmoduls, im Laderaum dient.

In weiterer Ausgestaltung der Erfindung ist an dem Funktionsmodul wenigstens eine zum Laderauminneren weisende Funktionsspur vorgesehen, die Befestigungs-, Halte- oder Kontaktierungsfunktionen übernimmt. In der Funktionsspur können Steckdosen für den Anschluss elektrischer Geräte wie Staubsauger oder ähnliches vorgesehen sein, die durch das Bordnetz gespeist werden. Zudem kann die Funktionsspur zur Befestigung von Segmentier- oder Abdeckeinheiten für den Laderaum dienen. Die Funktionsspuren können auch zur Aufnahme von Befestigungsmitteln, wie Haken oder Ösen, dienen, die zur zeitweisen Halterung von Transportgegenständen vorgesehen sind.

In weiterer Ausgestaltung der Erfindung ist fahrzeugfest im Bereich von wenigstens einer Innenraumfläche wenigstens eine Funktionsspur vorgesehen, die das wenigstens eine Funktionsmodul begrenzend flankiert, und/oder die Befestigungs-, Halte- oder Kontaktierungsfunktionen übernimmt. Vorzugsweise ist eine entsprechende Funktionsspur als aus Metall bestehendes Schienenprofil gestaltet.

In weiterer Ausgestaltung der Erfindung sind als Halterung eine Stecksicherung und eine zu der Stecksicherung beabstandete Verriegelungseinheit miteinander kombiniert. Dabei können vorzugsweise die Stecksicherung und die Verriegelungseinheit derart aufeinander abgestimmt sein, dass das Funktionsmodul zunächst an einer Seite in gekipptem Zustand in die Stecksicherung eingeführt wird und anschließend durch einfaches Verkippen in die Funktionsposition die Verriegelungseinheit auslöst, wodurch selbsttätig beim Verkippen die fahrzeugfeste Verrastung und Sicherung des Funktionsmoduls erzielbar ist.

In weiterer Ausgestaltung der Erfindung ist dem Funktionsmodul eine Rückhaltesicherung zugeordnet, die das Funktionsmodul bei Fahrzeugaufprallbelastungen in Position hält. Eine solche Rückhaltesicherung kann durch Rahmen- oder Stützteile erzielt werden. In gleicher Weise ist eine Rückhaltesicherung durch den Einsatz von Stahlseilen, Ketten oder ähnlichen flexiblen Rückhaltemitteln erzielbar.

In weiterer Ausgestaltung der Erfindung weist die Halterung für das Funktionsmodul Energieabsorptionsmittel auf, die das Funktionsmodul halten. Dadurch ist es möglich, bei einem Fahrzeugaufprall mittels der Energieabsorptionsmittel in der Halterung Aufprallenergie vorzugsweise in Deformationsenergie umzuwandeln, wodurch die Belastungen auf das Funktionsmodul reduziert sind. Somit kann auch bei Fahrzeugaufprallbelastungen ein sicherer Rückhalt des Funktionsmoduls im Fahrzeuginnenraum gewährleistet werden.

Weitere Vorteile und Merkmale der Erfindung ergeben sich aus den Ansprüchen. Nachfolgend sind bevorzugte Ausführungsbeispiele der Erfindung beschrieben und anhand der Zeichnungen dargestellt.
- Fig. 1: zeigt eine Ausführungsform eines erfindungsgemäßen Laderaumes in perspektivischer Darstellung mit verschiedenen, alternativ einsetzbaren Funktionsmodulen und Funktionsteilen,
- Fig. 2: einen Laderaum ähnlich Fig. 1 ohne eingesetzte Funktionsmodule,
- Fig.3: den Laderaum nach Fig. 2 mit eingesetzten Funktionsmodulen,
- Fig. 4: in vergrößerter perspektivischer Darstellung ein Funktionsmodul für den Laderaum nach den Fig. 2 und 3,
- Fig. 5: in vergrößerter Schnittdarstellung einen oberen Bereich eines Funktionsmoduls ähnlich Fig. 4, bei dem ein Tragegriff zusätzlich als Bedienelement für eine karosserieseitige Befestigung des Funktionsmoduls dient,
- Fig. 6: in einer Schnittdarstellung den Bodenbereich des Funktionsmoduls nach Fig. 4, aus dem die fahrzeugseitige Befestigung erkennbar ist,
- Fig. 7: schematisch ein Funktionsmodul mit zwei Stauräumen, die von gegenüberliegenden Seiten her zugänglich sind,
- Fig. 8: eine Schnittdarstellung des Funktionsmoduls nach Fig. 7,
- Fig. 9: ein weiteres Funktionsmodul ähnlich Fig. 7, bei der ein Aufnahmebehältnis als Schublade gestaltet ist,
- Fig. 10: das Funktionsmodul nach Fig. 9 mit geöffneter Schublade,
- Fig. 11: ein Funktionsmodul in Form eines Freizeitmoduls,
- Fig. 12: ein Funktionsmodul, das für die Aufnahme eines Kühlschranks vorgesehen ist und
- Fig. 13: ein weiteres Funktionsmodul, das mit einem auffaltbaren, flexiblen Staubehältnis versehen ist.

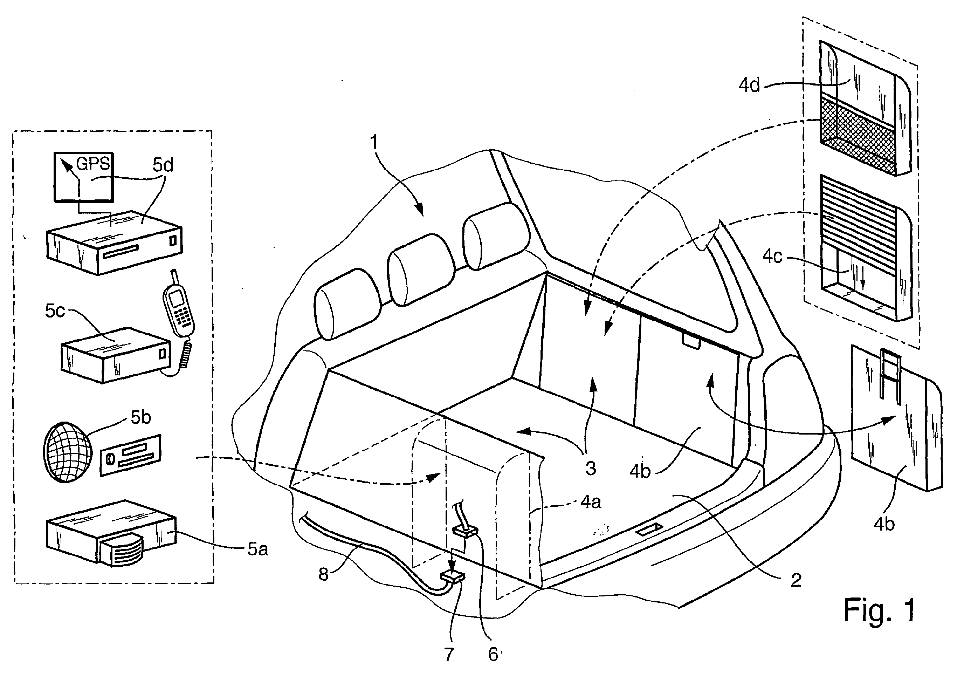

Ein Laderaum 1 für einen Kombi-Personenkraftwagen weist einen Laderaumboden 2 sowie auf gegenüberliegenden Fahrzeugseiten jeweils eine Seitenwand 3 auf, die wahlweise mit verschiedenen Funktionsmodulen 4a, 4b, 4c, 4d versehen ist. Die Seitenwände 3 stellen somit Verkleidungen der in Fig. 1 nicht sichtbaren seitlichen Karosserieteile dar.

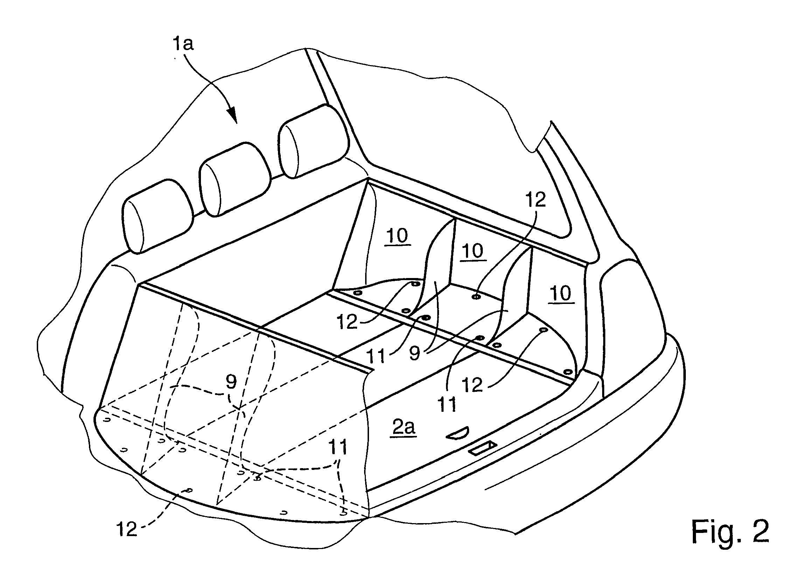

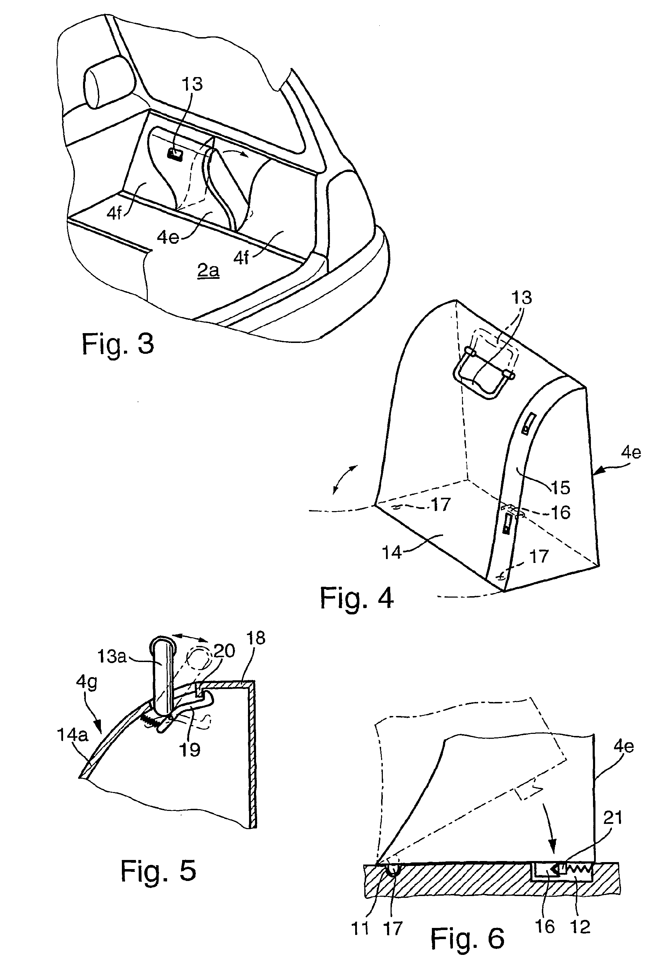

In Fig. 2 ist im Laderaum 1a, der ebenfalls einen Laderaum eines Personenkraftwagens darstellt, die jeweilige Seitenwand offen gestaltet, so dass ein Durchblick auf die seitlichen Karosserieteile 10 gegeben ist. Funktionsmodule 4a bis 4d, die die Karosserieseitenteile 10 verdecken und die innere Seitenwandbegrenzung für den Laderaum 1 darstellen können, sind bei dieser Ausführung entfernt. Karosserieseitig sind an den gegenüberliegenden Seiten jedoch jeweils zwei vertikal und in Fahrzeugquerrichtung ausgerichtete Schottwände 9 vorgesehen, die fahrzeug- und karosserieseitig befestigt sind. Die Schottwände 9 teilen die gegenüberliegenden Seiten des Laderaumes 1a in drei gleich breite Abschnitte ein, in die jeweils ein Funktionsmodul einsetzbar ist. Anhand der Fig. 3 bis 6 wird das Einsetzen eines solchen Funktionsmoduls 4e, 4f, 4g nachfolgend beschrieben.

Jedes Funktionsmodul 4a bis 4g stellt ein formstabiles Gebilde dar, das einen offenen oder geschlossenen Aufnahmeraum aufweist. Jedes Funktionsmodul 4a bis 4g ist fahrzeugseitig direkt oder indirekt mit der Fahrzeugkarosserie verbunden. Hierzu sind sowohl am Funktionsmodul 4e, 4g wie auch fahrzeugseitig entsprechende Befestigungsmittel 11, 12, 16, 17, 19, 20 vorgesehen, die eine formschlüssige Befestigung des Funktionsmoduls 4a bis 4g im Fahrzeug gewährleisten. Als formschlüssige Halterungen sind anhand der Fig. 2 und 4 sowie Fig. 6 bodenseitige Befestigungsmittel vorgesehen, die durch zwei zur Fahrzeugmitte hin vordere Halteaufnahmen 11 in einem seitlichen Bereich des Laderaumbodens 2a und durch korrespondierende Zentriernoppen 17 an den Unterseiten der Funktionsmodule 4e sowie durch einen relativ zur Fahrzeugmitte weiter hinten liegenden Rastblock 16 an der Unterseite des Funktionsmoduls 4e und eine korrespondiere Rastaufnahme 12 gebildet sind. In der Rastaufnahme 12 ist ein federbelasteter Rastbolzen 21 vorgesehen, der auf das Schwalbenschwanzprofil des Rastblockes 16 derart abgestimmt ist, dass er beim Einsetzen des Rastblockes 16 zunächst zurückgedrückt und anschließend in die Schwalbenschwanzaussparung durch die Federkraft eingedrückt wird. Im eingesetzten Zustand sitzt das Funktionsmodul 4e bündig zwischen den Schottwänden 9 und schließt mit seiner in den Laderaum 2a ragenden Stirnwand bündig und fluchtend mit den Vorderkanten der Schottwände 9 ab. Auch die benachbarten Funktionsmodule 4f (Fig. 3) sind vorzugsweise in gleicher Weise eingesetzt wie das Funktionsmodul 4e und weisen korrespondierend gestaltete Stirnwände auf, die eine gemeinsame Flucht bilden. Dadurch wird mittels dieser Stirnwände eine durchgängige Seitenwand für den Laderaum 2a geschaffen. Die Stirnwände 14 (Fig. 4) sind vorzugsweise derart verkleidet, dass sie auf die Innenraumgestaltung abgestimmt sind.

Beim Ausführungsbeispiel nach Fig. 5 ist ein geringfügig modifiziertes Funktionsmodul 4g vorgesehen, dessen Rückwand durch karosserieseitige Wandungs- und Profilabschnitte 18 gebildet ist, so dass das Funktionsmodul 4g in seinem von der Seitenwand entfernten Zustand Wannen- oder Schalenform aufweist. Die Halterung im Bereich des Bodens des Funktionsmoduls 4g kann ebenfalls durch formschlüssige Zentrier- oder Rastverbindungen erfolgen. Zusätzlich ist im oberen Bereich des Funktionsmoduls 4g gemäß Fig. 5 eine weitere, manuell lösbare Arretierung vorgesehen, die durch einen Rasthaken 19 am Funktionsmodul 4g gebildet ist, der einen Profilsteg des Wandungs- und Profilabschnittes 18 hintergreift. Der Wandungs- und Profilabschnitt 18 ist karosseriefest angeordnet, so dass ein sicherer Rückhalt des Funktionsmoduls 4g im montierten Zustand gewährleistet ist. Der Rasthaken 19 ist einstückig mit einem Tragegriff 13a des Funktionsmoduls 4g verbunden, wie anhand der Fig. 5 erkennbar ist. Durch ein Nachhintendrücken des Haltegriffes 13a kann der Rasthaken 19 von dem Profilsteg 20 gelöst werden, wodurch das Funktionsmodul 4g nach vorne, d.h. zur Laderaummitte hin entfernt werden kann.

Die Funktionsmodule 4a bis 4g sind seitlich des Laderaumbodens 2, 2a an die entsprechenden Karosserieseitenteile 10 anfügbar und bilden somit zumindest abschnittsweise die Seitenwände 3 des Laderaumes 1, 1a. Dabei können gemäß Fig. 1 bis 3 mehrere Funktionsmodule 4a bis 4g nebeneinander positioniert sein, so dass diese Funktionsmodule 4a bis 4g gemeinsam die Seitenwand für den jeweiligen Laderaum 1, 1a bilden. Es ist jedoch auch möglich, die Seitenwand 3 für die Aufnahme lediglich eines einzelnen Funktionsmoduls auszusparen. Die übrigen Verkleidungsteile der Seitenwand sind dann feststehend gestaltet. Anhand der Fig. 1, 3, 4, 5 sind verschiedene Ausführungen von Funktionsmodulen 4a bis 4g dargestellt. Wie anhand der Fig. 1 erkennbar ist, können Funktionsmodule 4c und 4d derart wannenförmig gestaltet sein, dass sie zur Laderaummitte hin offen sind, wobei dieser offene Bereich durch Schließteile wie ein Haltenetz, ein Schieberollo oder ähnliches zumindest abschnittsweise verschließbar sind. Gemäß dem Funktionsmodul 4b kann auch ein doppelschaliges Behältnis vorgesehen sein, das mit einem Tragegriff versehen ist und bei dem die beiden formstabilen Schalen nach Art eines Koffers auseinandergeklappt und zusammengefügt werden können.

Beim Funktionsmodul 4a ist der in dem Funktionsmodul 4a vorhandene Aufnahmeraum für die Halterung und Befestigung technischer Funktionsteile 5a bis 5d, wie insbesondere einem CD-Wechsler, einem Hifi-Soundsystem, einer Telekommunikationsbox oder einem Navigationsgerät vorgesehen. Hierzu ist das Funktionsmodul 4a bereits mit einem vorbereiteten Steckanschluss 6 versehen, an den die Leitungen der elektrischen oder elektronischen Funktionsteile 5a bis 5d anschließbar sind. Der Steckanschluss 6 korrespondiert zu einem fahrzeugseitigen Verbindungsanschluss 7, der über entsprechende Anschlussleitungen 8 die Verbindung zum fahrzeugeigenen Bordnetz sowie zu entsprechenden fahrzeugseitigen elektronischen Steuerkomponenten schafft. Der Steckanschluss 6 des Funktionsmoduls 4a kann an einem Boden des Funktionsmoduls 4a derart befestigt sein, dass sich zwangsläufig beim Einsetzen des Funktionsmoduls 4a die Steckverbindung mit dem fahrzeugseitigen Verbindungsanschluss 7 ergibt. In gleicher Weise wird diese Steckverbindung bei einem Entfernen des Funktionsmoduls 4a aus dem Fahrzeug wieder gelöst. Dadurch ist es möglich, die entsprechend benötigten technischen Funktionsteile im Funktionsmodul 4a vorzumontieren, so dass fahrzeugseitige Befestigungen dieser Funktionsteile, wie sie beim Stand der Technik vorgesehen sind, entfallen können.
Im Bereich der Stirnwand 14 des Funktionsmoduls 4e ist seitlich eine Funktionsspur 15 vorgesehen, die mit nicht näher bezeichneten Halteschlitzen zum Einhängen von Befestigungshaken oder ähnlichem vorgesehen ist. In diesen Befestigungsschlitzen können auch Segmentierungseinheiten für den Laderaum gehalten werden.

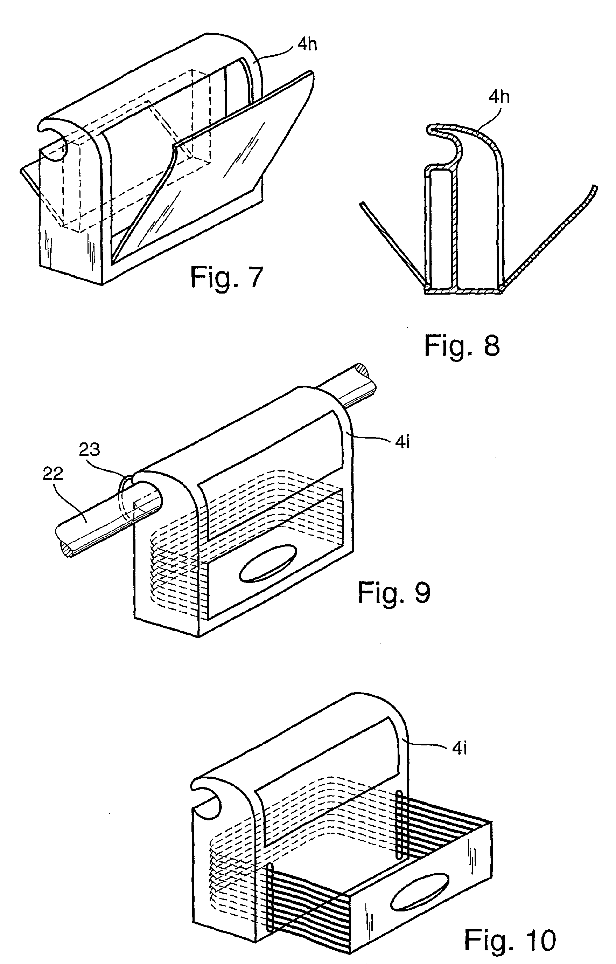

Ein Funktionsmodul 4h gemäß den Fig. 7 und 8 ist als formstabiles Aufnahmebehältnis gestaltet, das sowohl vorder- als auch rückseitig jeweils einen Stauraum aufweist. Der vordere Stauraum ist durch eine größere und der rückseitige Stauraum durch eine kleinere Klappe verschließbar. Beide Klappen sind schwenkbeweglich im Bereich eines Bodens des Aufnahmebehältnisses angeordnet. In einem oberen Bereich ist das Funktionsmodul 4h rückseitig mit einer über die gesamte Breite durchgängigen Griffmulde versehen, die neben der Grifffunktion auch die Halterungsfunktion für das Funktionsmodul 4h übernimmt. Dazu ist entsprechend dem in Fig. 9 dargestellten Ausführungsbeispiel zum Funktionsmodul 4i ein fahrzeugfest angeordnetes Rückhalteprofil 22 vorgesehen, mit dem das Funktionsmodul 4h wie auch das Funktionsmodul 4i durch eine nicht näher dargestellte Halterung formschlüssig verbindbar sind. Zusätzlich ist noch eine Rückhaltesicherung 23 vorgesehen, die als Energieabsorptionsmittel gestaltet ist. Die Rückhaltesicherung wird durch ein flexibles Stahlseil 23 gebildet, das am Funktionsmodul 4h, 4i befestigt ist und im montierten Zustand das Rückhalteprofil 22 umgreift. Die Rückhaltesicherung kann als Energieabsorptionsmittel mit einem Streckmetall oder einem Kraftbegrenzer oder einem anders gestalteten, plastisch deformierbaren Teil versehen sein. Bei dem Funktionsmodul nach den Fig. 9 und 10 ist als Stauraum ein schubladenförmig ausziehbarer Rahmen vorgesehen, der in Fig. 10 in seinem geöffneten Zustand dargestellt ist. Der Rahmen kann auch mit einem Boden versehen sein, so dass er eine vollständige Schubladenfunktion aufweist.

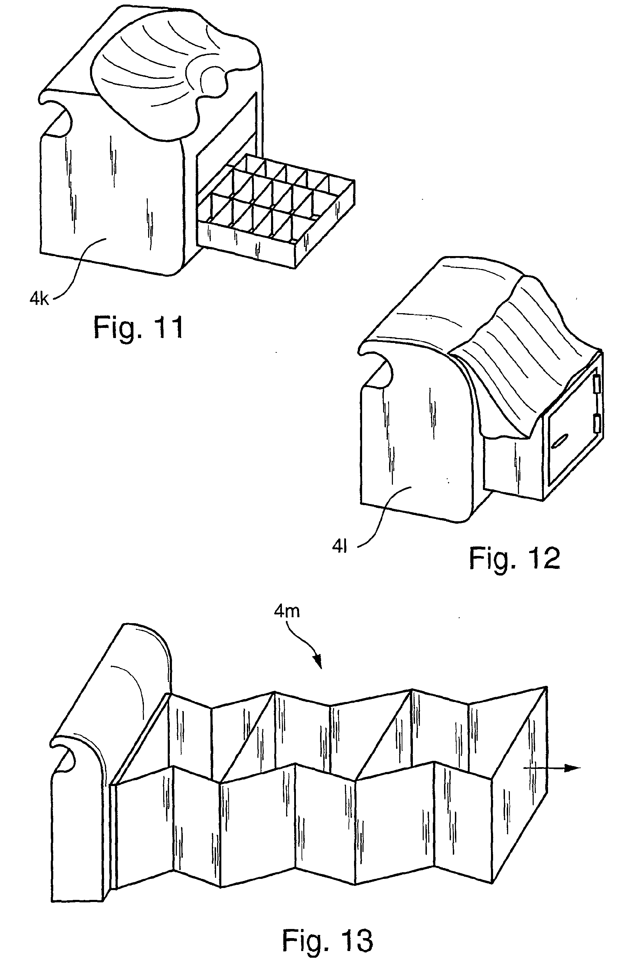

Beim Ausführungsbeispiel nach Fig. 11 ist ein Funktionsmodul 4k vorgesehen, das als Hobby- oder Freizeitzubehör gestaltet ist. Das Funktionsmodul 4k stellt insbesondere ein Angelmodul dar, wobei an einer Frontseite Schubladen für den Angelbedarf vorgesehen sind. Im Bereich einer Oberseite ist ein Sitz vorgesehen. Das Funktionsmodul 4k ist vollständig aus dem Fahrzeug entnehmbar, so dass dieser Sitz an der jeweiligen Angelstelle positioniert und als Sitzgelegenheit für die angelnde Person eingesetzt werden kann.

Beim Ausführungsbeispiel nach Fig. 12 ist das Funktionsmodul 41 als Aufnahmekasten für einen Kühlschrank dargestellt, dessen Tiefe über die normale Tiefe des in den Seitenwandungen für ein Funktionsmodul zur Verfügung stehenden Hohlraumes hinausgeht. Aus diesem Grunde ist das Funktionsmodul 41 mit einer größeren Tiefe wie die übrigen Funktionsmodule versehen. Um das Vorstehen des Funktionsmodules 41 zu verdecken, weist das Funktionsmodul ein flexibles Blendenmaterial auf, das vorhang- oder überhangartig mit rückseitigen Abschnitten des Funktionsmoduls 41 verbunden ist.

Ein Funktionsmodul 4m nach Fig. 13 entspricht im wesentlichen einem formstabilen Aufnahmebehältnis, wie es anhand der Fig. 7 bis 10 dargestellt ist. Wesentlicher Unterschied beim Funktionsmodul 4m ist es, dass frontseitig eine auffaltbare, flexible Tascheneinheit vorgesehen ist, die beim dargestellten Ausführungsbeispiel drei Aufnahmetaschen beherbergt. Im Bereich der Außenseiten der Seitenwandungen der Falttaschen sind Fixiermittel vorgesehen, die die Wandungen der Aufnahmetaschen im zusammengefalteten Zustand gegeneinander fixieren. Im zusammengefalteten Zustand ist die Tascheneinheit in einem entsprechenden Hohlraum innerhalb des Funktionsmoduls 4m integriert. Die Tascheneinheit ist rückseitig fest mit dem Hohlraum und damit mit dem Funktionsmodul 4m verbunden.

## Patentansprüche

1. Laderaum für ein Kraftfahrzeug mit einem Laderaumboden sowie mit zwei einander gegenüberliegenden Seitenwänden, wobei wenigstens eine Seitenwand (3) mit wenigstens einem formstabilen Funktionsmodul (4a bis 4m) versehen ist, das karosserieseitig gehalten ist, und das als Behältnis gestaltet ist und einen offenen oder geschlossenen Aufnahmeraum für wenigstens ein Funktionsteil (5a bis 5d) aufweist und wobei das wenigstens eine Funktionsmodul (4a bis 4m) in der Seitenwand (3) derart integriert ist, dass es mit seiner Stirnwand einen Abschnitt der Seitenwand (3) des Laderaumes bildet,
**dadurch gekennzeichnet, dass** das Funktionsmodul (4a bis 4m) mittels einer formschlüssig wirksamen, manuell lösbaren Halterung im Laderaum (1, 1a) befestigt ist.

2. Laderaum nach Anspruch 1, **dadurch gekennzeichnet, dass** wenigstens eine Stirnfläche des Funktionsmoduls (4e) mit einer Verkleidung versehen ist, die auf die übrige Verkleidungsfläche des Laderaumes (1, 1a) abgestimmt ist.

3. Laderaum nach Anspruch 1, **dadurch gekennzeichnet, dass** das Funktionsmodul (4g) als zu wenigstens einer Seite offenes Behältnis gestaltet ist.

4. Laderaum nach Anspruch 1, **dadurch gekennzeichnet, dass** das Funktionsmodul (4b) als geschlossenes, kastenartiges Behältnis gestaltet ist.

5. Laderaum nach Anspruch 1, **dadurch gekennzeichnet, dass** das Funktionsmodul (4a) wenigstens einen Steckanschluss (6) für die lösbare Verbindung zu fahrzeugfesten elektrischen Anschlussleitungen (8) aufweist.

6. Laderaum nach Anspruch 5, **dadurch gekennzeichnet, dass** laderaumseitig ein korrespondierender Verbindungsanschluss (7) vorgesehen ist, der mit dem Steckanschluss (6) im montierten Zustand des Funktionsmoduls (4a) eine Steckverbindung eingeht.

7. Laderaum nach Anspruch 1, **dadurch gekennzeichnet, dass** im Bereich einer Seitenwand (3) wenigstens zwei aneinander anschließende Funktionsmodule (4a bis 4g) vorgesehen sind, die miteinander fluchtende, ins Laderauminnere weisende Stirnflächen aufweisen.

8. Laderaum nach Anspruch 7, **dadurch gekennzeichnet, dass** karosserieseitig wenigstens eine fest angeordnete, sich in Fahrzeugquerrichtung erstreckende Schottwand (9) vorgesehen ist, die ein Funktionsmodul seitlich flankiert oder zwischen zwei benachbarten Funktionsmodulen angeordnet ist.

9. Laderaum nach Anspruch 3 oder 4, **dadurch gekennzeichnet, dass** das Behältnis wenigstens einen Tragegriff (13a) aufweist, der zusätzlich als Bedienelement für die manuell lösbare Halterung (19, 20) des Behältnisses im Laderaum ausgeführt ist.

10. Laderaum nach Anspruch 1, **dadurch gekennzeichnet, dass** an dem Funktionsmodul (4e) wenigstens eine zum Laderauminneren weisende Funktionsspur (15) vorgesehen ist, die Befestigungs-, Halte- oder Kontaktierungsfunktionen übernimmt.

11. Laderaum nach Anspruch 1, **dadurch gekennzeichnet, dass** fahrzeugfest im Bereich von wenigstens einer Innenraumfläche wenigstens eine Funktionsspur vorgesehen ist, die das wenigstens eine Funktionsmodul begrenzend flankiert, und/oder die Befestigungs-, Halte- oder Kontaktierungsfunktionen übernimmt.

12. Laderaum nach Anspruch 10 oder 11, **dadurch gekennzeichnet, dass** die Funktionsspuren als vorzugsweise aus Metall bestehende Schienenprofile gestaltet sind.

13. Laderaum nach Anspruch 1, **dadurch gekennzeichnet, dass** als Halterung eine Stecksicherung und eine zu der Stecksicherung beabstandete Verriegelungseinheit miteinander kombiniert sind.

14. Laderaum nach Anspruch 1, **dadurch gekennzeichnet, dass** dem Funktionsmodul eine Rückhaltesicherung (23) zugeordnet ist, die das Funktionsmodul (4h) bei Fahrzeugaufprallbelastungen in einer fahrzeugfesten Position hält.

15. Laderaum nach Anspruch 1, **dadurch gekennzeichnet, dass** die Halterung für das Funktionsmodul Energieabsorptionsmittel aufweist, die das Funktionsmodul halten.

## Claims

1. Storage space for a motor vehicle, having a storage space base and two mutually facing side walls, at least one side wall (3) being provided with at least one dimensionally stable functional module (4a to 4m) which is held at the body side and which is constructed as a container and has an open or closed reception space for at least one functional component (5a to 5d), and the at least one functional module (4a to 4m) being integrated in the side wall (3) in such a manner that it forms, with the end wall thereof, a portion of the side wall (3) of the storage space, **characterised in that** the functional module (4a to 4m) is secured in the storage space (1, 1a) by means of a positive-locking, manually releasable holder.

2. Storage space according to claim 1, **characterised in that** at least one end face of the functional module (4e) is provided with a panel which is matched to the remaining panel surface of the storage space (1, 1a).

3. Storage space according to claim 1, **characterised in that** the functional module (4g) is constructed in the form of a container which is open at least at one side.

4. Storage space according to claim 1, **characterised in that** the functional module (4b) is constructed in the form of a closed, box-like container.

5. Storage space according to claim 1, **characterised in that** the functional module (4a) has at least one plug-type connector (6) for detachable connection to electrical connection lines (8) which are secured to the vehicle.

6. Storage space according to claim 5, **characterised in that** there is provided, at the storage space side, a corresponding linking connection (7) which, in the installed state of the functional module (4a), forms a plug-type connection with the plug-type connector (6).

7. Storage space according to claim 1, **characterised in that**, in the vicinity of a side wall (3), there are provided at least two mutually adjacent functional modules (4a to 4g) having aligned end faces which are directed towards the interior of the storage space.

8. Storage space according to claim 7, **characterised in that** there is provided, at the body side, at least one fixed bulkhead partition (9) which extends in the vehicle transverse direction and which laterally flanks a functional module or is positioned between two adjacent functional modules.

9. Storage space according to claim 3 or 4, **characterised in that** the container has at least one carrying handle (13a), which is additionally constructed as an operating element for the manually releasable holder (19, 20) of the container in the storage space.

10. Storage space according to claim 1, **characterised in that**, on the functional module (4e), there is provided at least one functional track (15) which is directed towards the interior of the storage space and which performs fixing, holding or contacting functions.

11. Storage space according to claim 1, **characterised in that**, secured to the vehicle in the vicinity of at least one interior surface, there is provided at least one functional track, which flanks in a bounding manner the at least one functional module and/or performs fixing, holding or contacting functions.

12. Storage space according to claim 10 or 11, **characterised in that** the functional tracks are preferably in the form of metal rail profile-sections.

13. Storage space according to claim 1, **characterised in that** plug-type retaining means and a locking unit which is spaced-apart therefrom are combined together to form a holder.

14. Storage space according to claim 1, **characterised in that** with the functional module there is associated a retaining device (23), which retains the functional module (4h) in a position secured to the vehicle in the event of vehicle impact stresses.

15. Storage space according to claim 1, **characterised in that** the holder for the functional module has energy absorption means which hold the functional module.

## Revendications

1. Compartiment de chargement pour un véhicule automobile avec un fond de compartiment de chargement ainsi que deux parois latérales se faisant face, au moins une paroi latérale (3) étant pourvue d'au moins un module fonctionnel (4a à 4m) indéformable, qui est maintenu côté carrosserie et qui est réalisé sous forme de conteneur et qui présente un compartiment de réception ouvert ou fermé pour au moins un élément fonctionnel (5a à 5d) et le au moins un module fonctionnel (4a à 4m) étant intégré dans la paroi latérale (3) de sorte qu'il forme avec sa paroi frontale une portion de la paroi latérale (3) du compartiment de chargement, **caractérisé en ce que** le module fonctionnel (4a à 4m) est fixé, au moyen d'une fixation manuellement détachable et agissant par correspondance de forme, dans le compartiment de chargement (1a, 1a)

2. Compartiment de chargement selon la revendication 1, **caractérisé en ce qu'**au moins une surface avant du module fonctionnel (4e) est pourvue d'un revêtement, qui est adapté au reste de la surface de revêtement du compartiment de chargement (1, 1a).

3. Compartiment de chargement selon la revendication 1, **caractérisé en ce que** le module fonctionnel (4g) est réalisé sous forme de conteneur ouvert sur au moins un côté.

4. Compartiment de chargement selon la revendication 1, **caractérisé en ce que** le module fonctionnel (4b) est réalisé sous forme de conteneur fermé en forme de caisse.

5. Compartiment de chargement selon la revendication 1, **caractérisé en ce que** le module fonctionnel (4a) présente au moins une prise enfichable (6) pour la liaison amovible à des lignes de raccordement électriques (8) fixées au véhicule.

6. Compartiment de chargement selon la revendication 5, **caractérisé en ce qu'**un raccord (7) correspondant, qui entre en liaison avec la prise enfichable (6) lorsque le module fonctionnel (4a) est monté, est prévu côté compartiment de chargement.

7. Compartiment de chargement selon la revendication 1, **caractérisé en ce qu'**au moins deux modules fonctionnels (4a à 4g) raccordés les uns aux autres, qui présentent des surfaces avant dirigées vers l'intérieur du compartiment de chargement, alignées les unes avec les autres, sont prévus dans la zone d'une paroi latérale (3).

8. Compartiment de chargement selon la revendication 7, **caractérisé en ce qu'**au moins une cloison de séparation (9) disposée de manière fixe, s'étendant dans la direction transversale du véhicule qui flanque latéralement un module fonctionnel ou est disposée entre deux modules fonctionnels voisins est prévue côté carrosserie.

9. Compartiment de chargement selon la revendication 3 ou 4, **caractérisé en ce que** le conteneur présente au moins une poignée de transport (13a) qui est réalisée en plus sous forme d'élément d'actionnement pour la fixation (19, 20) manuellement détachable du conteneur dans le compartiment de chargement.

10. Compartiment de chargement selon la revendication 1, **caractérisé en ce qu'**au moins une piste fonctionnelle (15) dirigée vers l'intérieur du compartiment de chargement, qui prend en charge les fonctions de fixation, de maintien ou de contact, est prévue au niveau du module fonctionnel (4e).

11. Compartiment de chargement selon la revendication 1, **caractérisé en ce qu'**au moins une piste fonctionnelle, qui flanque de manière limitative l'au moins un module fonctionnel et/ou prend en charge les fonctions de fixation, de maintien ou de contact, est prévue de manière fixe au véhicule dans la zone d'au moins une surface de compartiment intérieur.

12. Compartiment de chargement selon la revendication 10 ou 11, **caractérisé en ce que** les pistes fonctionnelles sont réalisées de préférence sous forme de rails profilés métalliques.

13. Compartiment de chargement selon la revendication 1, **caractérisé en ce qu'**un dispositif de sécurité enfichable et une unité de verrouillage distante du dispositif de sécurité enfichable sont combinés l'un à l'autre comme fixation.

14. Compartiment de chargement selon la revendication 1, **caractérisé en ce qu'**un dispositif de sécurité de retenue (23), qui maintient le module fonctionnel (4h) dans une position fixe sur le véhicule en cas de sollicitations de collision du véhicule, est associé au module fonctionnel.

15. Compartiment de chargement selon la revendication 1, **caractérisé en ce que** la fixation pour le module fonctionnel présente des moyens d'absorption d'énergie, qui maintiennent le module fonctionnel.
